# EUROPEAN PATENT SPECIFICATION

(11) **EP 0 319 710 B1**
(45) Date of publication and mention of the grant of the patent: **12.01.1994**
(21) Application number: 88118331.3
(22) Date of filing: 03.11.1988
(51) Int. Cl.: B25B 5/08, B25B 5/06

(54) **Hydraulic clamp**
Hydraulische Spannvorrichtung
Dispositif de serrage hydraulique

(30) Priority: 09.11.1987 JP 282665/87; 28.12.1987 JP 335141/87
(43) Date of publication of application: 14.06.1989
(73) Proprietor: Kabushiki Kaisha Kosmek, Amagasakishi Hyogoken (JP)
(72) Inventor: Yonezawa, Keitaro, Amagasakishi Hyogoken (JP)
(74) Representative: Goddar, Heinz J., Dr.

(56) References cited:
- EP-A- 0 125 220
- DE-A- 2 009 991
- FR-A- 1 191 564
- FR-A- 2 136 248
- FR-A- 2 376 990
- FR-A- 2 562 179
- GB-A- 1 300 772
- US-A- 2 625 910
- US-A- 2 752 801
- US-A- 3 456 536
- US-A- 4 504 046
- US-E- 25 334

## Description

The present invention relates to a hydraulic clamp which serves to fixedly press a member to be clamped, through a clamping means by a hydraulic oil pressure of a hydraulic cylinder.

### Prior Art

A fluid actuated clamp with a piston, a fluid chamber and clamping means, according to the preamble of claim 1, is already disclosed in the US-A-2 752 801. But the clamp described there has the disadvantages that forces are conveyed over a long length with high energy consumption, a relative large amount of fluid is necessary for it due to elastic deformations and that reliability and durability of the clamp are not good due to its construction.

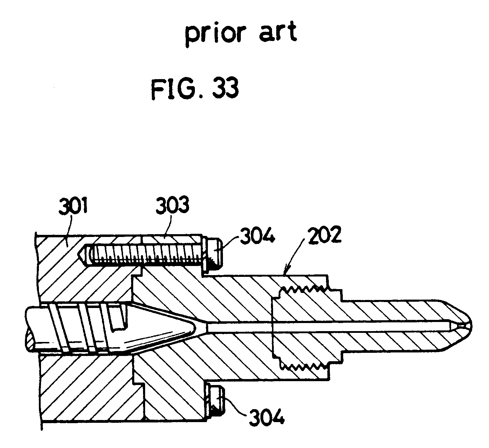

As a means for detachably fixing a member to be clamped to a fixed member, has been known also the one shown in Fig. 33, for example.

In this example, a flange 303 of a cylinder head 302 as a member to be clamped is adapted to be fixed to a screw cylinder 301 as a fixed member of an injection molding machine by means of a plurality of detachable bolts 304.

This fixing means has such an advantage as to be simple in construction, but has such a disadvantage as to require much labor for clamping because the detachable bolts 304 are threadably engaged and tightened manually in threaded holes of the screw cylinder 301 whenever the cylinder 302 as a member to be clamped is exchanged.

For eliminating this disadvantage, previously the inventor of the present invention contrived a clamping apparatus which performs a clamping operation automatically through a plurality of hydraulic clamps of the type having retractable clamping means. As a construction of the hydraulic clamp of the type having retractable clamping means, has been known the one, for example shown in US-A-4,504,046 ( Date of Patent: Mar. 12, 1985 ) proposed previously by the inventor of the present invention.

The above-mentioned clamping apparatus has an adapter plate fixed on the leading end surface of a screw cylinder and a plurality of hydraulic cylinders arranged in the peripheral direction of the adapter plate with the respective clamping means thereof facing toward the center side of the adapter plate. And at the time of the clamping operation, first of all the clamping means of each hydraulic cylinder is retracted in the front portion of the clamp body and then a cylinder head is placed on the central portion of the adapter plate under such retracted condition of the clamping means. Next, the clamping means is advanced outside the front portion of the clamp body by a hydraulic pressure of the hydraulic cylinder so that the flange of the cylinder head as a passive portion is pressed to the adapter plate by each clamping means.

However, there are following disadvantages (a) and (b) associated with the clamp apparatus.
(a) The whole of the clamp apparatus is large.
   Since the respective hydraulic clamps project radially from the clamping position of the member to be clamped, the external size of the clamp apparatus gets large and the whole thereof gets large-sized.
(b) The clamping force per unit area is small.
   Since the arrangement pitches of the clamping means in the peripheral direction get necessarily large for preventing the interferences between the neighboring hydraulic clamps and the unclampable range gets large, the clamping force per unit area is small. Therefore, the pressure per unit area exerted to the flange of the member to be clamped gets large and tends to damage and deform the flange.

### SUMMARY OF THE INVENTION

An object of the present invention is to provide a hydraulic clamp in which the clamping operation can be performed readily, the whole of a clamp apparatus can be made small and the clamping force per unit area can be increased. Such a hydraulic clamp is defined by the combination of feature of claim 1.

For accomplishing the object, a hydraulic clamp according to the present invention is constructed as follows.

That is, a cylinder body of a hydraulic cylinder is provided with a clamping actuation oil chamber, a piston and a clamping means arranged in order along the axial direction of the hydraulic cylinder. The clamping means is constructed so as to be expanded and contracted between the clampable advanced position and the unclampable retracted position which are settled respectively in different distances from the axis of the hydraulic cylinder. And the clamping means are adapted to be pushed toward the unclampable retracted position side by a retracting means as well as to be pushed toward the clampable advanced position side by an advancement slant cam.

And first of all, the clamping means is pushed from the unclampable retracted position to the clampable advanced position through the advancement slant cam by a former stage of hydraulic actuation force within the clamping actuation oil chamber for hydraulically actuating the piston and then the clamping means is actuated for clamping from an unclamped position to a clamped position by a latter stage of hydraulic actuation force within the clamping actuation oil chamber.

By the way, in the above-mentioned construction, the clamping means is adapted to be actuated in two kind of manners for switching over from the unclampable retracted position to the clampable advanced position, namely in a contracting manner and in an expanding manner.

Since the present invention is constructed and functions as mentioned above, the following advantages can be attained.
(a) The clamping operation becomes easy.
   Since the clamping means is adapted to be operated in a sequential switching interlockingly with the piston within the hydraulic cylinder, it is not necessary to manipulate the clamping means manually and it becomes easy to perform the clamping operation of the hydraulic clamp.
(b) The clamp apparatus can be made small in size and simplified.
   Since the hydraulic clamp doesn't project largely in the radial direction, the external size of the apparatus can be made small and the apparatus can be manufactured in a small size. Further, since an actuation device as well as a control device to be used only for switching over are not required for the sequential switching operation of the clamping means, the whole construction thereof can be simplified as well as the manufacturing cost thereof can be reduced.
(c) The manipulation of the hydraulic clamp becomes easy.
   Further, since the actuation device and the control device to be used only for switching over an be omitted as mentioned above, the hydraulic clamp can be made small in size and light in weight. Accordingly, the manipulation of the hydraulic clamp becomes easy as well as the working efficiency is enhanced.
(d) The clamping force per unit area is large.
   Since the clamping means can be arranged along the periphery of the passive portion formed in the member to be clamped or in the member to be forced, a range incapable of being forced can be made less and the clamping force per unit area can be made large. Resultantly, the clamping capability of the hydraulic clamp can be enhanced.
(e) The durability of the passive portion which is formed in the member to be clamped or in the member to be forced is high.
   Since the clamping means can have a large transmission area for a clamping force owing to the reduction of the range incapable of being forced as mentioned above, the pressure per unit area exerted on the passive portion can be kept small. And since the transmission surface of the clamping means can be provided substantially uniformly throughout the periphery of the passive portion, a stress concentration can be prevented and a bending stress is hardly generated. Since the pressure per unit area is small and the generation of the bending stress can be prevented in that way, the durability of the passive portion is enhanced.
(f) Uneven tightening for the passive portion can be prevented.
   In the case that the clamping operation is performed by one hydraulic clamp, since the whole periphery of the passive portion can be tightened simultaneously evenly by the clamping means, uneven tightening for the passive portion can be prevented. Therefore, for example in case that the hydraulic clamp is employed for detachably mounting a lid of a sealed container, a good sealing therefor can be attained.
(g) The total clamping force in a certain extent of mounting space is enhanced.
   Since the mounting space is made small by the compact arrangement as mentioned above, the mounting pitch of the hydraulic clamps can be made small as well as the mounting number of the hydraulic clamps can be increased in the case that a great number of hydraulic clamps are mounted and operated in a certain mounting space. Resultantly, the total clamping force obtained by summing up the clamping forces of the all mounted hydraulic clamps can be increased.

### BRIEF DESCRIPTION OF THE DRAWINGS

Figures 1 through 32 are views showing embodiments of the present invention;
Figures 1 through 7 show the first embodiment;
Figure 1 is a total view showing a using condition of a hydraulic clamp;
Figure 2 is an explanatory view of the operation of the hydraulic clamp, Figure 2(a) is a view showing an unclamped condition, Figure 2(b) is a view showing a switching transitive condition, and Figure 2(c) is a view showing a clamped condition;
Figure 3 is a perspective view showing a clamping means of the hydraulic clamp;
Figure 4 is a plan view showing the clamping means existing in a clampable advanced position;
Figure 5 is a plan view showing the clamping means existing in an unclampable retracted position;
Figure 6 is a sectional view on VI - VI line in Fig. 4;
Figure 7 is a sectional view of VII - VII line in Fig.5;
Figures 8 through 14 show variant examples of said first embodiment;

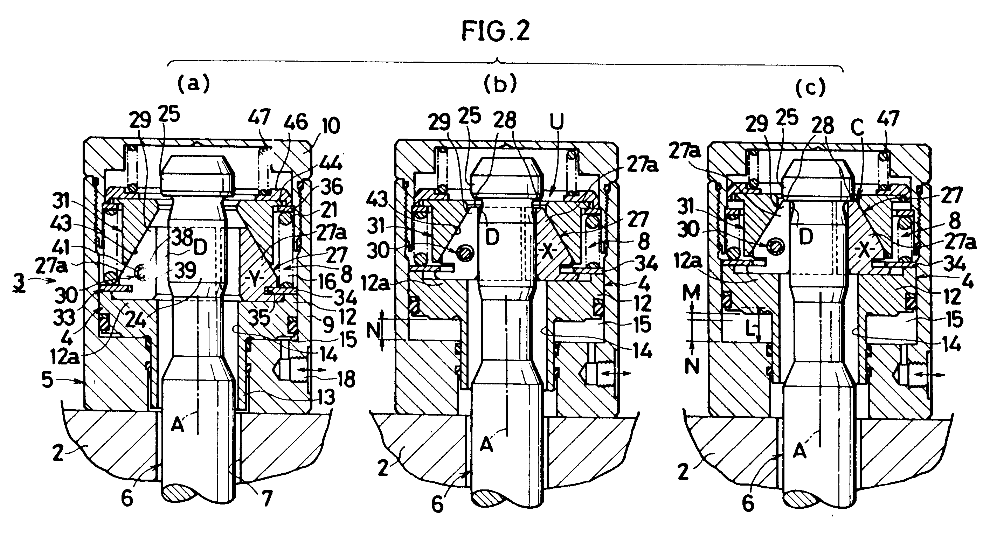

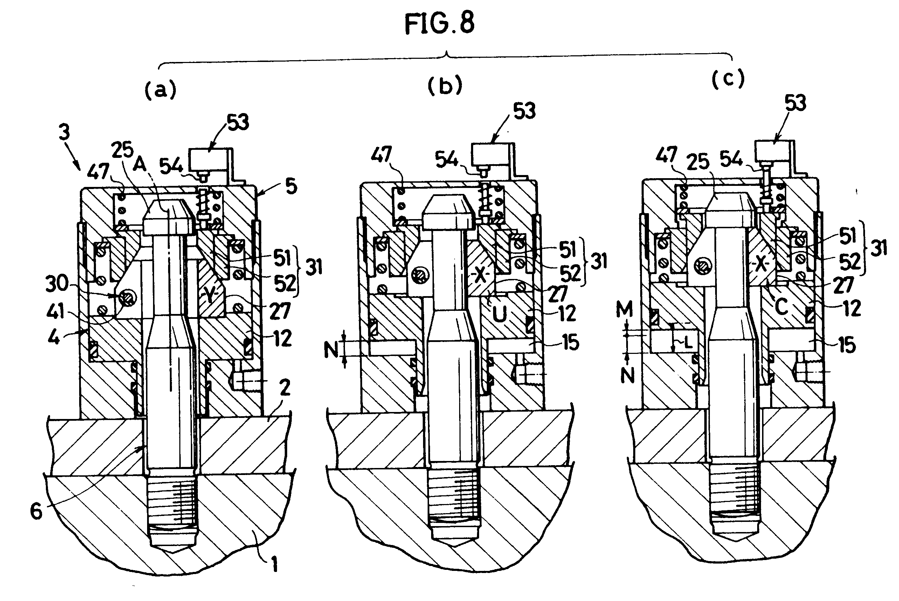

Figure 8 shows the first variant example and is a view corresponding to Fig. 2:

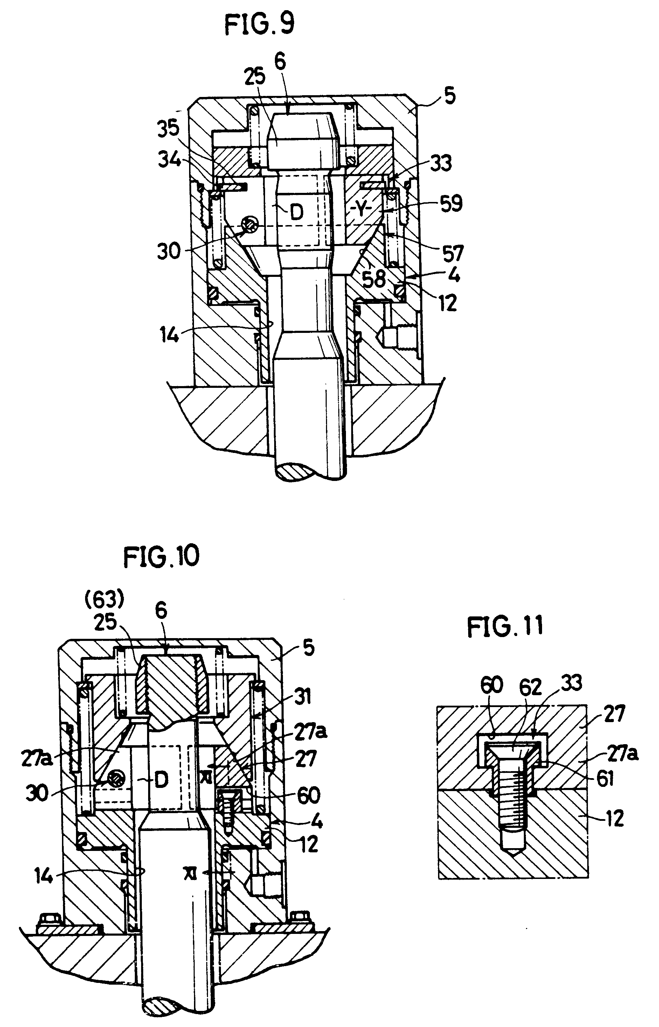

Figure 9 shows the second variant example and is a view corresponding to Fig. 2(a);
Figure 10 and Figure 11 show the third variant example;
Figure 10 is a view corresponding to Fig. 2(a);
Figure 11 is a sectional view on XI - XI line in Fig. 10;

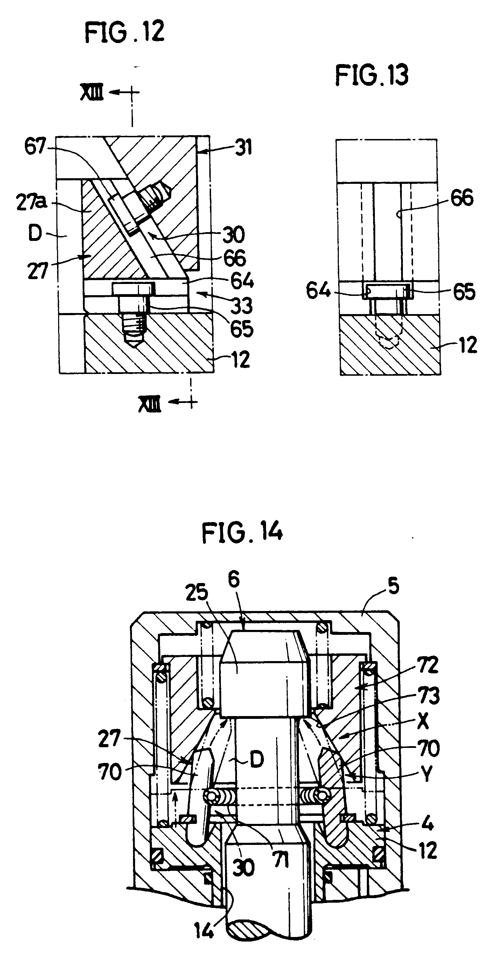

Figure 12 and Figure 13 show the fourth variant example;
Figure 12 is a vertical sectional view of a principal part of the hydraulic clamp;
Figure 13 is a sectional view on XIII - XIII line in Fig. 12;
Figure 14 shows the fifth variant example and is a partial view corresponding to Fig. 2(a);

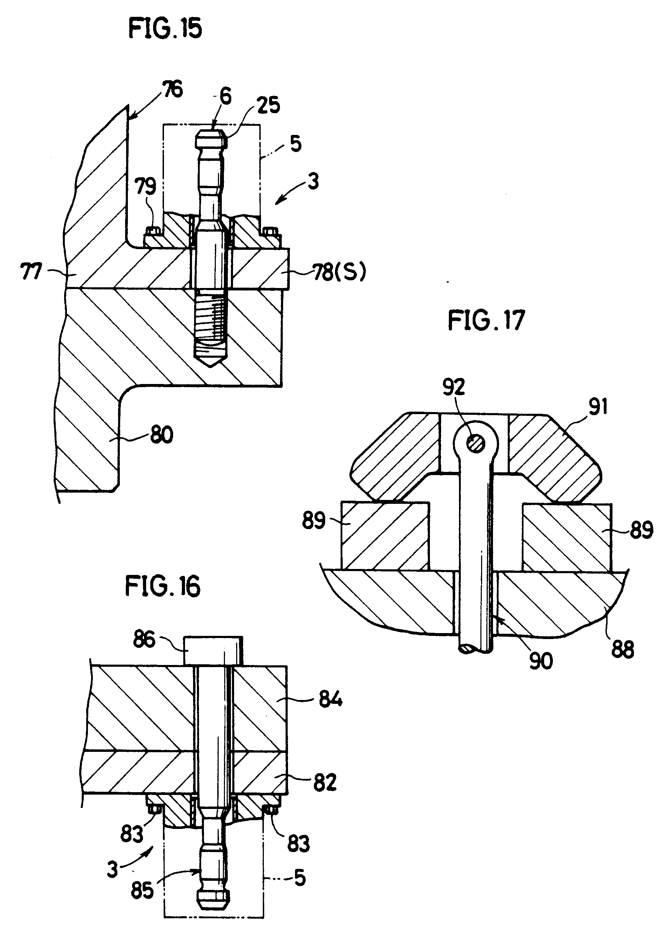

Figure 15 shows the second embodiment and is a total view showing a using condition of the hydraulic clamp;
Figure 16 shows the third embodiment and is a total view showing a using condition of the hydraulic clamp;
Figure 17 shows the fourth embodiment and is a partial view of the hydraulic clamp;

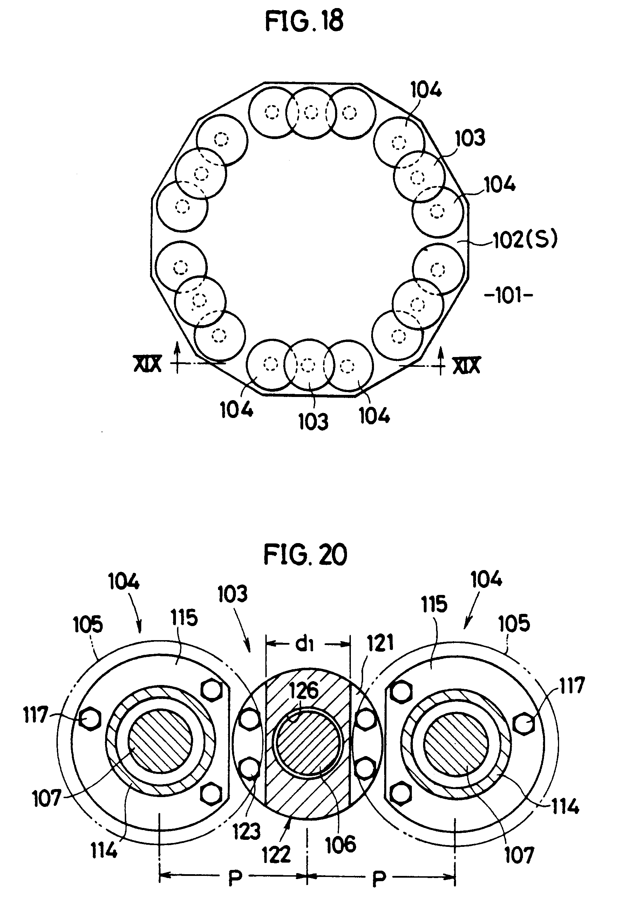

Figures 18 through 20 show the fifth embodiment;
Figure 18 is a plan view showing a mounting condition of a plurality of hydraulic clamps;

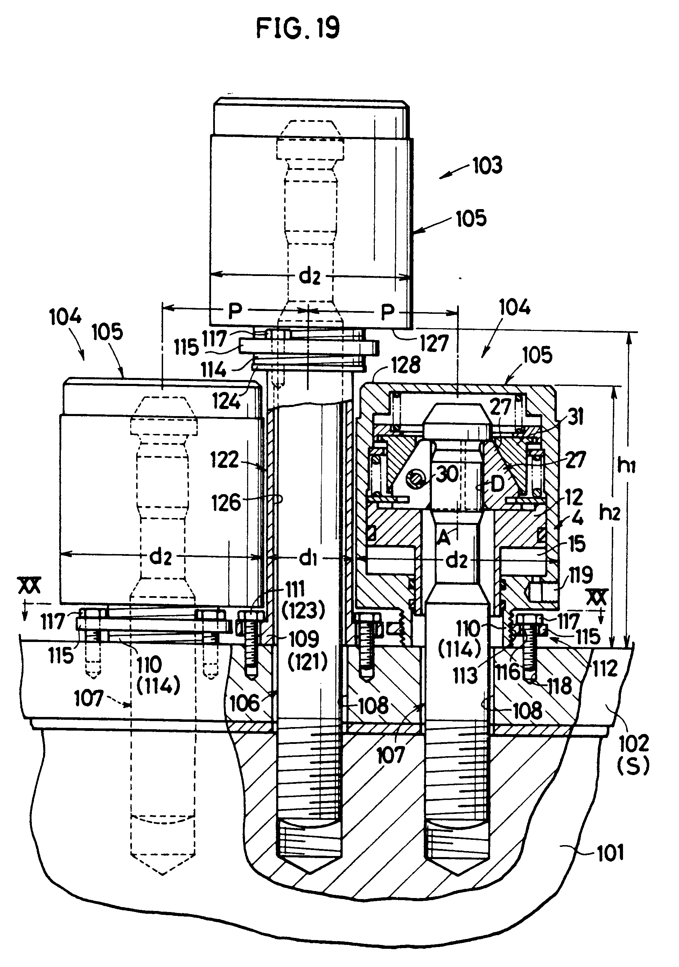

Figure 19 is a partial sectional view on XIX - XIX line in Fig. 18;

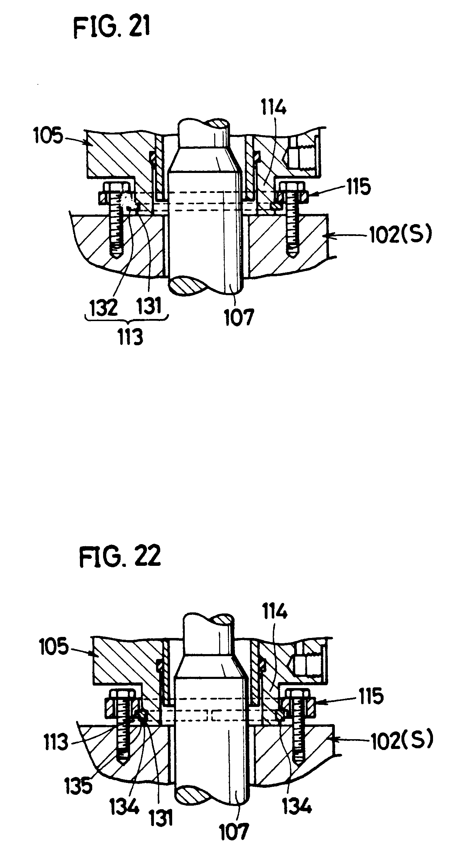

Figure 20 is a sectional view on XX - XX line in Fig. 19;
Figure 21 and Figure 22 show variant examples of the fifth embodiment;
Figure 21 shows the first variant example and is a partial view showing a mounting condition of the hydraulic clamp;
Figure 22 shows the second variant example and is a partial view showing a mounting condition of the hydraulic clamp;

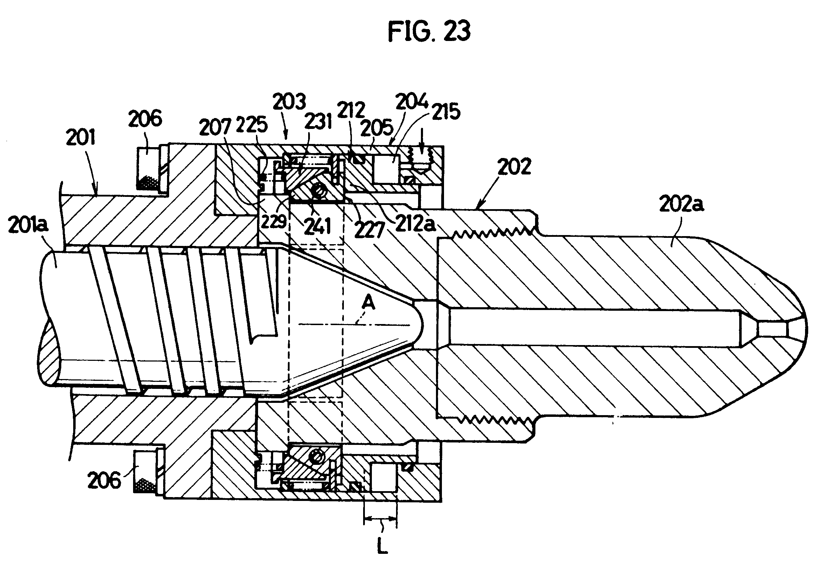

Figures 23 through 28 show the sixth embodiment;
Figure 23 is a total view showing a using condition of the hydraulic clamp;

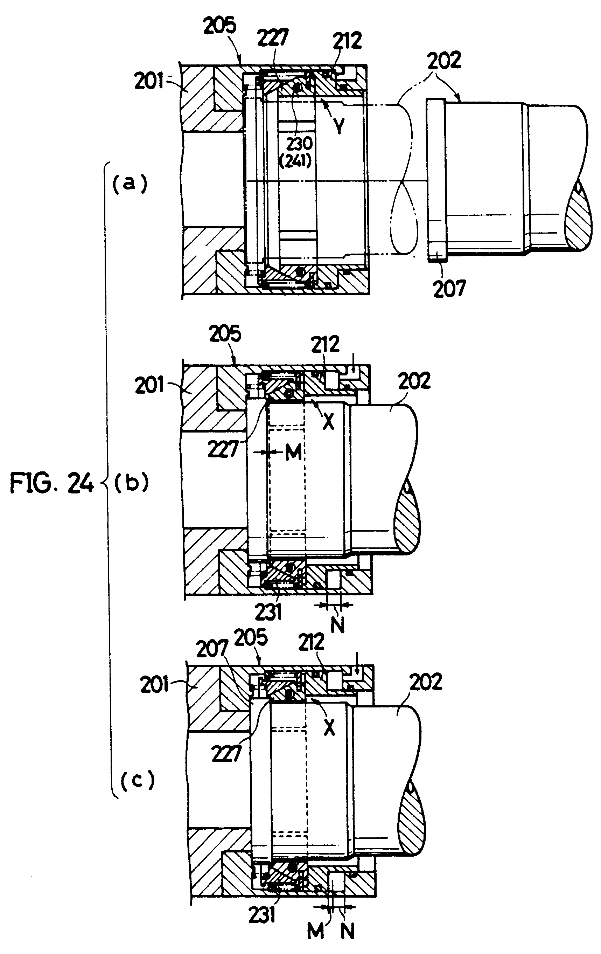

Figure 24 is an explanatory view of the operation of the hydraulic clamp, Figure 24(a) is a view showing an unclamped condition, Figure 24(b) is a view showing a switching transitive condition, and Figure 24(c) is a clamped condition;

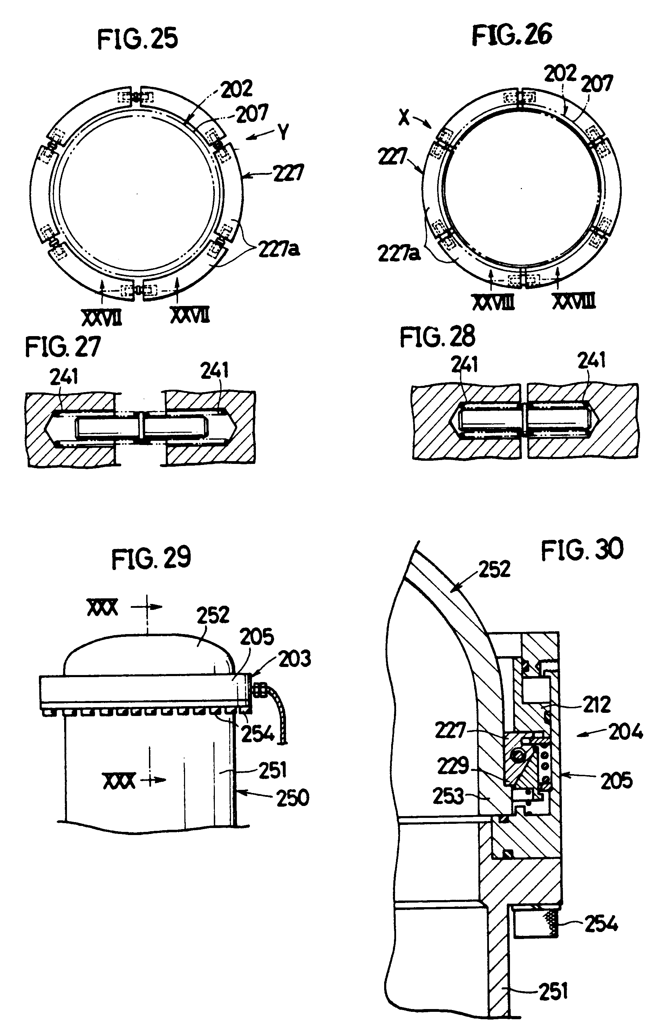

Figure 25 is a plan view showing a clamping means existing in the unclampable retracted position;
Figure 26 is a plan view showing the clamping means existing in the clampable advanced position;
Figure 27 is a sectional view on XXVII - XXVII line in Fig. 25;
Figure 28 is a sectional view on XXVIII - XXVIII line in Fig. 26;
Figure 29 and Figure 30 show the seventh embodiment;
Figure 29 is an external view showing a using condition of the hydraulic clamp;
Figure 30 is a sectional view on XXX - XXX line in Fig. 29;

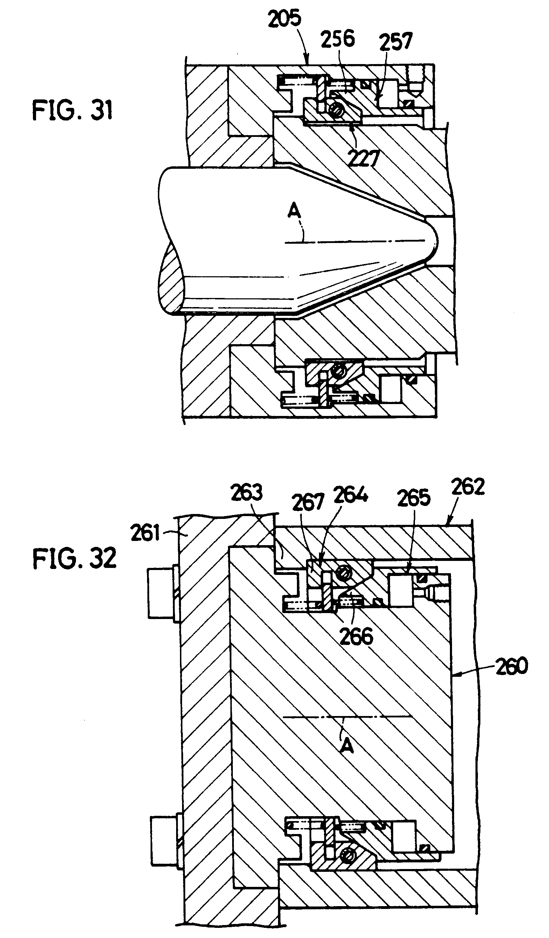

Figure 31 shows the eighth embodiment and is a sectional view of a using condition of the hydraulic clamp;
Figure 32 shows the ninth embodiment and is a sectional view of a using condition of the hydraulic clamp; and
Figure 33 shows a prior art means for detachably fixing a member to be clamped to a fixed member and is a sectional view showing a clamped condition of a member to be clamped;

### DESCRIPTION OF THE PREFERRED EMBODIMENTS

Now the embodiments of the present invention will be explained with reference to the drawings hereinafter.

### 〈First Embodiment〉

Fig.s 1 through 7 show the first embodiment.

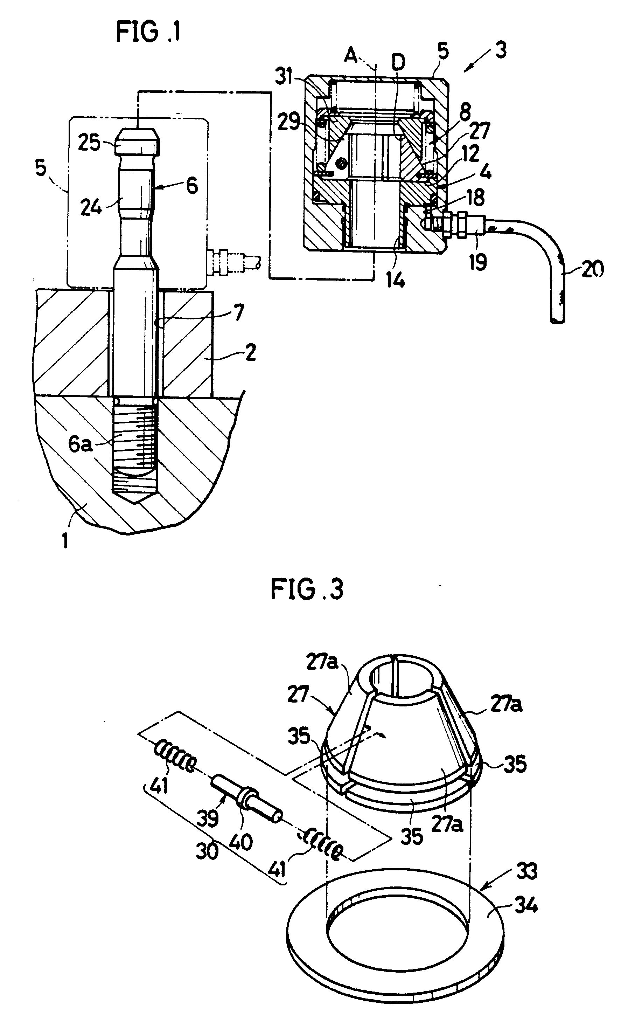

In a total view of Fig. 1, a mold 2 as a member to be clamped is fixedly secured through a hydraulic clamp 3 onto the upper surface of a fixture stand 1 as a fixed member. The hydraulic clamp 3 is adapted to pressedly fix the mold 2 between the fixture stand 1 and the one end ( the lower end in the drawings ) of the cylinder body 5 of the hydraulic cylinder 4 by a hydraulic pressure of a hydraulic cylinder 4 through a clamp rod 6 as a member to be forced for clamping. The clamp rod 6 is passed vertically through a hole 7 for for tightening the mold 2 and is threadably fixed at the foot portion 6a of its one end side ( the lower end side in the drawings ) to the fixture stand 1. Within the upper portion of the cylinder body 5, there is provided a clamping force switching means 8.

And at the time of the clamping operation, first of all the cylinder body 5 is put about the clamp rod 6 so as to be inserted thereby 6 from the upper side by a hand of a worker. Then, a pushing-up force is applied to the clamp rod 6 by a hydraulic pressure of the hydraulic cylinder 4 through the clamping force switching means 8 so that the mold 2 can be pressedly fixed on the upper surface of the fixture stand 1 by a reaction force exerting to the cylinder body 5.

The construction of above-mentioned hydraulic clamp 3 will be explained in more detail with reference to Fig.s 2(a) through 2(c).

First of all, the hydraulic cylinder 4 will be explained.

The hydraulic cylinder 4 is of the type being returned by a single-acting spring, and the cylinder body 5 thereof comprises a cylinder member 9 and a cover plate 10 threadably secured to the upper portion of the cylinder member 9. And a piston 12 is provided vertically slidably in an oil-tight manner within the lower portion of the cylinder member 9. A guide rod 13 is projected from the underside of the piston 12. A through-hole 14 for the clamp rod 6 is formed in both the piston 12 and the guide rod 13 along substantially the same axis as the axis A of the hydraulic cylinder 4. A clamping actuation oil chamber 15 is provided below the piston 12, and a spring chamber 16 is provided above the piston 12. As shown in Fig. 1, the clamping actuation oil chamber 15 is hydraulically connected to an oil hydraulic pressure source ( not illustrated ) through an oil supply/discharge passage 18, a connection fitting 19 and a hydraulic hose 20. A piston return spring 21 comprising a compression spring is provided within the spring chamber 16.

And the clamp rod 6 as the member to be forced for clamping has a passive portion 25 formed at the upper side of a through portion 24 thereof to be inserted into the cylinder body 5. The passive portion 25 is formed larger in diameter than the through portion 24.

Next, the clamping force switching means 8 will be explained.

It has a truncated corn shaped clamping means 27 placed on the upper surface of the piston 12, a retracting means 30 provided within the clamping means 27 so as to spread the clamping means 27 expansively and an advancement slant cam 31 kept in contact with the outer peripheral surface of the clamping means 27 from the upper side thereof, and it is constructed as shown in Fig. 1(a) and Fig.s 3 through 7.

The clamping means 27 comprises three divided clamping members 27a, 27a, 27a, of which inner peripheral surfaces form a clamp rod passage D which extends vertically. The respective clamping members 27a are adapted to be displaced expansively and contractively in the radial direction of the clamp rod passage D through a guide means 33. That is, a guide ring 34 is placed on the peripheral edge portion of the upper surface of the piston 12. And a ring-shaped spring retainer 36 is abutted to an intermediate shoulder portion of the cover plate 10. The piston return spring 21 is mounted between the the spring retainer 36 and the guide ring 34, and the guide ring 34 is adapted to move synchronously together with the vertical movement of the piston 12. Guide grooves 35 are provided in the outer peripheral lower portions of the respective clamping members 27a so as to extend in the peripheral direction thereof 27a, and the inner peripheral edge of the guide ring 34 is fitted within the guide groove 35 radially slidably.

And the retracting means 30 is constructed as follows.

The neighboring clamping member 27a, 27a of the clamping means 27 are provided with spring retaining holes 38, 38 which extend opposingly each other in the tangential direction, and into which a positioning pin 39 is inserted. And a retracting spring 41 comprising a compression spring is mounted between the bottom wall of each spring retaining hole 38 and a spring retaining seat 40 formed by enlarging the middle of the positioning pin 39.

And the advancement slant cam 31 is formed in a cylindrical configuration and has a cam surface 43 formed by an inner peripheral surface of which diameter gets larger gradually as descending downwardly. A flange portion 44 is protruded from the upper portion of the peripheral wall of the advancement slant cam 31 outwardly in the diametrical direction thereof, and the flange portion 44 is abutted against the upper surface of the spring retainer 36. Further, a cam restoring spring 47 comprising a compression spring is provided between the upper wall of the cover plate 10 and a cylindrical spring retainer 46 placed on the upper surface of the advancement slant cam 31. The resilient force of the cam restoring spring 47 is settled weaker than that of the piston returning spring 21.

And as shown in Fig. 2, an allowable stroke L of the piston 12 within the cylinder body 5 is settled not less than a value obtained by summing up a clamping actuation lift M and a clamping means advancing lift N.

While the piston 12 is actuated from the lower side of the cylinder body 5 to the upper side thereof through the distance of the clamping means advancing lift N for a clamping means advancing actuation, the clamping means 27 is adapted to be advanced by the advancement slant cam 31 against the retracting spring 41 from an unclampable retracted position Y to a clampable advanced position X.

On the one hand, while the piston 12 is actuated upwardly through the distance of the clamping actuation lift M provided at the upper side beyond the clamping means advancing lift N for a clamping actuation, a piston output portion 12a synchronously moving with the piston 12 is adapted to actuate the clamping means 27 from an unclamped position U to a clamped position C.

The switching from the unclamped condition shown in Fig. 2(a) to the clamped condition shown in Fig. 2(c) is carried out according to the following sequence.

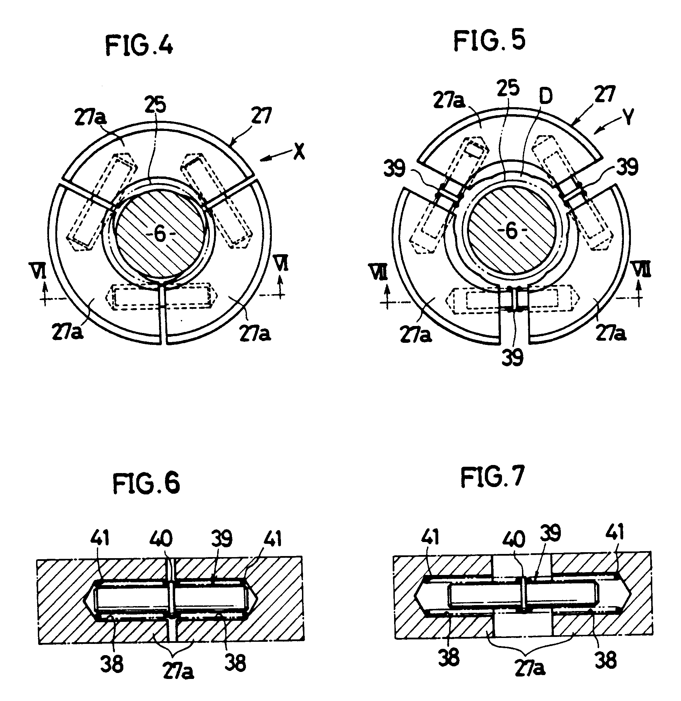

As shown in Fig. 2(a), under such a condition that the pressure oil is discharged from the clamping actuation oil chamber 15 so as for the piston 12 to be lowered by the spring force of the piston returning spring 21, the respective clamping members 27a of the clamping means 27 are moved expansively by the retracting spring 41 of the retracting means 30 along the guide ring 34 so that the clamping means 27 is switched over to the unclampable retracted position Y ( refer to Fig. 5 and Fig. 7 ). Under this unclamped condition, the clamp rod passage D is opened, the diameter of the inner peripheral surface of the clamping means 27 gets larger than the outer diameter of the passive portion 25 so that the passive portion 25 can pass through the clamp rod passage D.

And as shown in Fig. 2(b), when the piston 12 is actuated upwardly by the pressure oil supplied to the clamping actuation oil chamber 15, the outer peripheral surfaces of the clamping members 27a of the clamping means 27 are adapted to be pushed inwardly through the cam surface 43 of the advancement slant cam 31 by the former stage of the ascending actuation force which ascendantly actuates the piston 12 to the extent of the lift N so that the clamping means 27 can shift contractively to the clampable advanced position X along the guide ring 34 with compressing the retracting spring 41 ( refer to Fig. 4 and Fig. 6 ). Therefore, the clamp rod passage D is narrowed so as to take such a switching transitive condition that the transmission surface 28 composed of the upper end surfaces of the clamping members 27a opposes to the lower surface of the passive portion 25.

Further, when the piston 12 is actuated upwardly to the extent of the lift M, the clamped condition as shown in Fig. 2(c) is attained. That is, the clamping means 27 is moved upwardly by the latter stage of the ascending actuation force for the piston 12 against the resilient force of the cam restoring spring 47 while the clamping means 27 is kept in the clampable advanced position X so that the transmission surface 28 of the clamping member 27a can abut against the lower surface of the passive portion 25. Therefore, the hydraulic pushing-up force of the piston 12 is transmitted to the passive portion 25 through the clamping means 27 so that the clamp rod 6 is actuated upwardly for clamping and the clamped condition is attained.

On the other hand, the switching from the clamped condition shown in Fig. 2(c) to the unclamped condition shown in Fig. 2(a) is carried out in the reversed sequence with respect to the above-mentioned one. In this case, while the piston 12 is actuated from the upper side to the lower side through the distance of the lift N for a clamping means retracting actuation, the guide ring 34 separates the respective clamping members 27a from the advancement slant cam 31 so as to lower the clamping means 27.

The present invention functions as follows.

As shown in Fig. 2, when the clamping means 27 is switched over from the unclamped condition shown in Fig. 2(a) to the clamped condition shown in Fig. 2(c) through the switching transitive condition shown in Fig. 2(b), first of all the clamping means 27 actuated by the piston 12 is guided by the advancement slant cam 31 and shifted contractively substantially uniformly about the axis A of the hydraulic cylinder 4. Then, the transmission surface 28 provided in the upper end of the clamping means 27 is brought in contact with the underside of the passive portion 25 so as to actuate the passive portion 25 for clamping.

When the clamping means 27 is switched over from the unclampable retracted position Y to the clampable advanced position X, since the clamping means 27 is shifted contractively substantially uniformly about the axis A and the transmission surface 28 is provided throughout the whole periphery of the passive portion 25, the open range incapable of transmission can be lessened and a large transmission area can be obtained. Therefore, the transmission capability of the clamping means 27 gets increased and the clamping capability of the hydraulic clamp 3 is enhanced.

And since the transmission area of the transmission surface 28 of the clamping means 27 is large as mentioned above, the pressure per unit area in the contact surfaces of the clamping means 27 and the passive portion 25 is decreased. Furthermore, since the transmission surface 28 is provided substantially uniformly along the whole periphery of the passive portion 25, a stress concentration or a bending stress is hardly generated in the clamp rod 6. Accordingly, the durability of the clamp rod 6 is enhanced.

Further, since the clamping means 27 is directly switched by the piston 12 of the hydraulic cylinder 4, a switching actuation device used only for the clamping force switching means 8 can be omitted. Furthermore, since the operational sequence between the positional switching operation and the clamp/unclamp actuating operation of the clamping means 27 can be classified respectively by the former stage of the ascending actuation force and the latter stage of the ascending actuation force for the piston 12, also a control device used only for such an operation control can be omitted. Since the switching actuation device as well as the control device can be omitted in that way, the whole construction of the hydraulic clamp 3 can be simplified.

Fig.s 8 through 14 show the variant examples of the hydraulic clamp 3. Constructions different from the above first embodiment will be explained. And component members having the same functions as the ones in the first embodiment are indicated by the same symbols as a rule.

### ( First Variant Example )

Fig. 8 shows the first variant example and is a view corresponding to Fig. 2.

In this case, the advancement slant cam 31 comprises an inside cam 51 and an outside cam 52. The outside cam 52 is fixedly secured to the cylinder body 5 and the inside cam 51 is supported by the outside cam 52 vertically slidably in the direction of the axis A of the hydraulic cylinder 4. And the inside cam 51 is resiliently biassed downwardly by the cam restoring spring 47 mounted on the inside cam 51.

And under the clamping means advancing actuation condition wherein the piston 12 is actuated from the lower side to the upper side through the distance of the clamping means advancing lift N, the clamping means 27 is adapted to be shifted contractively with being guided by the outside cam 52 from the unclampable retracted position Y to the clampable advanced position X.

And under the clamping actuation condition wherein the piston 12 is actuated from the lower side to the upper side through the distance of the clamping actuation lift M and the clamping means 27 is actuated from the unclamped position U to the clamped position C, the clamping means 27 is adapted to push and move the inside cam 51 to the upper side against the cam restoring spring 47.

A contact 54 of a limit-switch 53 for detecting the clamped position C is presented at the upper surface of the inside cam 51. Therefore, the switching over of the hydraulic clamp 3 to the clamped condition can be detected and the positive fixation of the member 2 to be clamped can be confirmed.

### ( Second Variant Example )

Fig. 9 shows the second variant example, in which a cylindrical advancement slant cam 57 is protruded from the upper surface of the piston 12. A downwardly tapering clamping means 59 is engaged with the upwardly enlarging conical cam surface 58 of the cam 57.

### ( Third Variant Example )

Fig.s 10 and 11 show the third variant example, which is embodied by modifying the guide means 33 as follows.

T-shaped grooves 60 which extend in the radial direction are formed in the lower portions of the respective clamping members 27a of the clamping means 27. T-shaped blocks 61 are fixedly secured to the upper portion of the piston 12 by means of flat head screws 62 so as to be slidably fitted in the T-shaped grooves 60 for guiding the radial slide of the clamping means 27. And the passive portion 25 of the clamp rod 6 is composed of a nut 63 threadably secured to the upper end portion of the clamp rod 6.

### ( Fourth Variant Example )

Fig.s 12 and 13 show the fourth variant example, which is embodied by modifying the guide means 33 as follows.

The head portion of the pin 65 for horizontally guiding is slidably fitted in the T-shaped groove 64 of the clamping means 27 and the foot portion of the guide pin 65 is threadably fixed to the upper portion of the piston 12. Instead of the above-mentioned retracting spring 41, the retracting means 30 is constructed as follows. That is, T-shaped grooves 66 for expansive shift are provided in the peripheral walls of the respective clamping members 27a of the clamping means 27 so as to extend downwardly. The head portion of the pin 67 for expansive actuation is slidably fitted in the T-shaped groove 66 and the foot portion of the pin 67 is threadably secured to the cam 31.

### ( Fifth Variant Example )

Fig. 14 shows the fifth variant example.

In this case, the clamping means 27 comprises a plurality of clamping rods 70, of which lower portions are supported pivotably by the upper portion of the piston 12. An expansively actuating coil spring 71 as the retracting means 30 is mounted in the inside middle portions of the rods 70 so that the upper end portions of the rods 70 are brought in contact with a cam surface 73 of an advancement slant cam 72. And when the piston 12 is ascendantly moved, the upper end portions of the rods 70 are adpated to be guided so as to move radially inwardly along the cam surface 73 and to engage with the passive portion 25 transmittably.

Fig.s 15 through 32 show other embodiments.

### 〈 Second Embodiment 〉

Fig. 15 shows the second embodiment.

In this embodiment, there is provided a flange 78 as a cylinder supporting member S in an output end portion of a slide 76 of a press machine as the fixed member. The cylinder body 5 of the hydraulic clamp 3 is fixedly secured on the upper surface of the flange 78 by a plurality of bolts 79. And the clamp rod 6 is threadably secured to the upper surface of an upper molding die 80 as the member to be clamped. When the upper molding die 80 is mounted to the slide 76, first of all the slide 76 is so lowered that the cylinder body 5 kept in the unclamped condition is inserted into with the upper half of the clamp rod 6, and then the hydraulic clamp 3 is operated so as to get in the clamped condition.

### 〈 Third Embodiment 〉

Fig. 16 shows the third embodiment.

In this embodiment, the cylinder body 5 is fixedly secured to the underside of a fixed member 82 by a plurality of bolts 83. A clamp rod 85 is inserted into both the fixed member 82 and a member 84 to be clamped which is kept placed on the fixed member 82 from their upper side so that the lower half portion of the clamp rod 85 is inserted into the cylinder body 5. And then, the hydraulic clamp 3 is operated so as to get in the clamped condition. By the way, the clamp rod 85 is adapted to be supported by the upper surface of the member 84 to be clamped, through a stopper portion 86 formed by enlarging the upper end of the clamp rod 86 in diameter.

### 〈 Fourth Embodiment 〉

Fig. 17 shows the fourth embodiment.

In this embodiment, a clamp arm 91 pivotably supported by the upper end of the clamp rod 90 is adapted to press a plurality of members 89, 89 to be clamped which are placed on the upper surface of the fixed member 88. The symbol 92 is a pivot pin.

### 〈 Fifth Embodiment 〉

Fig.s 18 through 20 show the fifth embodiment.

In Fig. 18, a cover plate 102 as a member to be clamped is adapted to be fixedly secured to the upper surface of a pressure container body 101 as a fixed member by means of a large number of hydraulic clamps 103, 104. The cover plate 102 serves as the cylinder supporting member S and is formed in a polygonal figure in plan view. One set of three hydraulic clamps 103, 104, 104 are arranged linearly on the cover plate 102 along the respective sides thereof 102.

One hydraulic clamp 103 disposed at the middle among three hydraulic clamps has a cylinder body 105 and a long clamp rod 106, and the other hydraulic clamps 104, 104 disposed at the opposite sides have the same cylinder bodies 105 and short clamp rods 107 respectively. By the way, these cylinder bodies 105 and clamp rods 106, 107 are constructed the same as the ones employed in the first embodiment ( refer to Fig.s 1 through 7 ), and the component members having the same construction are indicated by the same symbols.

The clamp rods 106, 107 is threadably secured in a predetermined pitch to the upper peripheral edge portion of the pressure container body 101, and a large number of through holes 108 for the clamp rods are provided in the peripheral edge portion of the cover plate 102 corresponding to those clamp rods 106, 107. The respective mounting portions 109, 110 provided in the base ends of the hydraulic clamps 103, 104 are fixedly secured to the upper edge portions of the respective through holes 108 by respective fixing means 111, 112.

The manipulation for mounting the cover plate 102 to the pressure container body 101 is carried out according to the following sequence. First of all, the cover plate 102 is so lowered that the through holes 108 of the cover plate 102 and the clamp rod passage D within the cylinder body 105 are inserted into with the clamp rods 106, 107. Then, a pushing-up force is applied to the clamp rods 106, 107 through the clamping means 27 by the hydraulic pressure of the hydraulic cylinder 4, and the cover plate 102 is pressedly fixed to the pressure container body 101 by a reaction force which is exerted from the clamp rods 106, 107 to the respective cylinder bodies 105.

Next, the fixing means 111, 112 will be explained.

A flange fitting portion 114 is formed by narrowing the lower portion of each cyinder body 105. A mounting flange 115 is adapted to be fitted to the flange fitting portion 114 from the lower side and turned adjustably thereabout so as to be threadably engaged with the flange fitting portion 114 at the middle height thereof. And the annular portion of the mounting flange 115 is provided with a plurality of mounting holes 116 which extend vertically and are arranged in the peripheral direction thereof 115, and mounting bolts 117 are fitted in the mounting holes 116.

In the other hydraulic clamp 104, the mounting portion 110 is constructed by the flange fitting portion 114, and the fixing means 112 is constructed by the mounting flange 115 and the mounting bolts 117. And the flange fitting portion 114 is fixedly pressed downwardly through the mounting flange 115 by a tightening force, which is applied to the mounting bolts 117 threadably engaged with threaded holes 118 of the cover plate 102.

In the one hydraulic clamp 103, a cylindrical prop 122 is interposed between the cylinder body 105 and a lower flange 121 as the mounting portion 109, and the prop 122 and the cylinder body 105 of the other hydraulic clamp 104 are arranged side by side each other. The peripheral edge of the mounting flange 115 of the other hydraulic clamp 104 is partially cut away so as to prevent the interference with the lower flange 121 of the hydraulic clamp 103 ( prefer to Fig. 20 ). The lower flange 121 is fixedly secured to the cover plate 102 by means of bolts 123 as the fixing means 111. And the flange fitting portion 114 of the clamp body 105 is fixedly secured to the upper flange 124 of the prop 122 through the mounting flange 115 and the mounting bolts 117. And a long clamp rod 106 is inserted into the cylindrical hole 126 provided in both the lower flange 121 and the prop 122.

The lateral dimension of the prop 122, namely the width d₁ thereof in the arrangement direction of both hydraulic clamps 103, 104 is settled smaller than the width ( the dimension of the outer diameter ) d₂ of the cylinder body 105. And the height of the prop 122 is so settled that the height ( h₁ ) of the lower end surface 127 of the cylinder body 105 of the one hydraulic clamp 103 gets higher than the height ( h₂ ) of the upper end surface 128 of the cylinder body 105 of the other hydraulic clamp 104. Therefore, the lower end surface 127 of the cylinder body 105 of the one hydraulic clamp 103 is located so as to overlap the upper end surface 128 of the cylinder body 105 of the other hydraulic clamp 104.

According to the above-mentioned construction, the mounting pitch P for the hydraulic clamps 103, 104 can be settled so as to get shorter by the overlap dimension between the neighboring cylinder bodies 105, 105 than the width dimension d₂ of the cylinder body 105. Therefore, the mounting number of the hydraulic clamps 103, 104 per unit space is increased and the total clamping force of the clamp apparatus gets larger.

And since the clamp apparatus can be equipped with so many small hydraulic clamps 103, 104 that a predetermined total clamping force is obtained, the width dimension of a row of clamps can be made small as well as the whole of the clamp apparatus can be made small.

And the setting up of the mounting flange 115 to the cylinder body 105 of the other hydraulic cylinder 104 is carried out as follows for example.

Previously, the mounting bolts 117 are inserted into the mounting holes 116 of the mounting flange 115 from the upper side thereof and kept hung freely. While the bolts 117 are kept hung in that way, the mounting flange 115 is fitted to the flange fitting portion 114 from the lower side thereof and engaged with the flange fitting portion 114 at a predetermined height thereof through a stopper means 113 composed of threaded fitting portions.

The manipulation for mounting the cylinder body 105 to the cylinder supporting member S is carried out as follows.

First of all, the cylinder body 105 as mentioned above is placed on the cylinder supporting member S and the foot of each mounting bolt 117 is directed and screwed lightly into the threaded hole 118 of the cylinder supporting member S. And then the cylinder body 105 is turned adjustably about the vertical axis thereof with respect to the mounting flange 115 so as to settle a piping connection port 119 in a suitable direction.

Next, the flange fitting portion 114 is pressedly fixed to the cylinder supporting member S through the mounting flange 115 as well as the stopper means 113 composed of the threaded fitting portions by the tightening of the mounting bolts 117.

When the mounting holes 116 are provided in the mounting flange 115, the flange projecting width required for the mounting hole 116 is settled in such a width as less than the radius of the cylinder body 105 as well as not less than the radius of the flange fitting portion 114. Accordingly, since the mounting flange 115 doesn't project outside the cylinder body 105, the outer diameter of the hydraulic clamp 103 can be kept small.

And there is provided such a small space that the heads of the mounting bolts 117 can be accommodated between the upper surface of the mounting flange 115 and the lower surface of the cylinder body 105. In this case, it is not necessary to provide a large space for putting in the bolts 117. Therefore, the length of the flange fitting portion 114 can be shortened and the total height of the hydraulic clamp 103 can be kept small.

By the way, in this embodiment, in case that the peripheral portion of the upper end surface 128 of the cylinder body 105 of the other hydraulic clamp 104 is so concaved that the cylinder body 105 of the hydraulic clamp 103 can be lowered, the height ( h₁ ) can be made lower than the height ( h₂ ).

And in spite that the fixing means 111 of the one hydraulic clamp 103 is composed of the bolts 123 as well as the fixing means 112 of the other hydraulic clamp 104 is composed of the mounting flange 115 and the mounting bolts 117, these fixing means 111, 112 may be constructed so as to enable the mounting portions 109, 110 to be directly threadably engaged with the cylinder supporting member S, to be connected thereto through couplings or to be fixedly secured thereto by means of welding.

Further, the cover plate 102 may be formed in a circular shape as well as the hydraulic clamps 103, 104 may be arranged alternatively.

Fig. 21 and Fig. 22 show variant examples of the stopper means 113 respectively.

### ( First Variant Example )

Fig. 21 shows the first variant example of the stopper means 113. In this example, the outer surface of the flange fitting portion 114 and the inner surface of the mounting flange 115 are formed straight. A peripheral groove 131 is provided in the flange fitting portion 114 at the middle position thereof so that a stopper ring 132 is fitted in the peripheral groove 131. The stopper means 113 is composed of these peripheral groove 131 and stopper ring 132.

### ( Second Variant Example )

Fig. 22 shows the second variant example of the stopper means 113. In this example, a plurality of stopper members 134 arranged in the peripheral direction are fitted in the peripheral groove 131 of the flange fitting portion 114. The stopper members 134 are fitted in a stopper step 135 of the mounting flange 115 as well as in the peripheral groove 131.

### 〈 Sixth Embodiment 〉

Fig.s 23 through 28 show the sixth embodiment.

Fig. 23 shows the hydraulic clamp applied for detachably mounting a cylinder head of an injection molding machine. A cylinder head 202 as a flanged member to be clamped is detachably fixed to the right surface of a screw cylinder 201 as a fixed member of the injection molding machine by a hydraulic clamp 203 so that molten resin can be injected from a nozzle 202a of the cylinder head 202 by means of a screw 201a inserted within the screw cylinder 201. The hydraulic clamp 203 has a cylinder body 205 of a hydraulic cylinder 204 fixedly secured to the right end surface of the screw cylinder 201 by a plurality of fixing bolts 206. And a clamping means 227 is adapted to be operatively pushed by the hydraulic pressure of the hydraulic cylinder 204 so as to fixedly press an outer flange portion 207 as a passive portion of the cylinder head 202 to the screw cylinder 201.

The hydraulic cylinder 203 comprises a clamping actuation oil chamber 215, a piston 212 and the clamping means 227 arranged in order between the one end wall ( the right end wall in the drawings and the same hereinafter ) and the other end wall ( the left end wall in the drawings and the same hereinafter ) of the cylinder body 205 and has a construction similar to the above-mentioned first embodiment.

The hydraulic clamp 203 operates as follows.

At the time of the clamping/unclamping operation of the hydraulic clamp 203, the clamping means 227 is adapted to be switched over as shown in Fig.s 24(a),(b),(c).

Fig. 24(a) shows the unclamped condition, wherein the piston 212 is retracted to the right end wall side of the cylinder body 205 so that the clamping means 227 is switched over to the unclampable retracted position Y by a retracting spring 241 of a retracting means 230 ( refer to Fig. 25 ).

Fig. 24 (b) shows the switching transitive condition, wherein the piston 212 is actuated to the left side by the clamping means advancing lift N so that the clamping means 227 is switched over to the clampable advanced position X by an advancement slant cam 231 ( refer to Fig. 26 ).

Fig. 24(c) shows the clamped condition, wherein the piston 212 is actuated further to the left side so that the clamping means 227 performs a clamping operation, namely so that the outer flange portion 207 of the cylinder head 202 as the member to be clamped is pressedly fixed between the clamping means 227 and the screw cylinder 201 as the fixed member.

At the time of the mounting of the cylinder head 202, the cylinder head 202 is set on the mounting surface of the screw cylinder 201 with held in the cylinder body 205 under the condition shown in Fig. 24(a). When the hydraulic cylinder 204 is hydraulically actuated, the clamping means 227 is switched over automatically from the unclampable retracted position Y to the clampable advanced position X interlockingly with the movement of the piston 212 during the switching over from the condition shown in Fig. 24(a) to the condition shown in Fig. 24(b), and then the clamping means 227 is moved to the left side so as to perform the clamping during the switching over from the condition shown in Fig. 24(b) to the condition shown in Fig. 24(c).

And at the time of the dismounting the cylinder head 202, the clamping means 227 is adapted to be switched over from the condition shown in Fig. 24(c) to the condition shown in Fig. 24(a) via the condition shown in Fig. 24(b) in the reversed sequence with respect to the above-mentioned sequence by the restoring operation of the hydraulic cylinder 204. Thereupon, the clamping means 227 is retracted to the unclampable retracted position Y by means of the retracting spring 241. Therefore, the cylinder head 202 can be dismounted from the screw cylinder 201 unless the outer flange portion 207 is caught in the clamping means 227.

Since the clamping means 227 is switched over interlockingly with the movement of the piston 212 of the hydraulic cylinder 204, it becomes unnecessary to manipulate the clamping means 227 manually and it becomes easy to perform the clamping by the hydraulic clamp 203.

And since it is enough to provide only one set of hydraulic clamp 203 as well as hydraulic pipings corresponding thereto, it is also enough to provide one set of actuation detecting means in the case that a clamping/unclamping operation is designed so as to be detected. Therefore, the whole clamp apparatus can be simplified in construction.

Further, since the hydraulic clamp 203 doesn't project largely in the radial direction from the fixing location of the cylinder head 202 as the member to be clamped, its outer diameter can be kept small and it can be manufactured in a small size.

And since the clamping means 227 is arranged in the peripheral direction of the outer flange portion 207 of the cylinder head 202, an unclampable range gets less as well as a clamping force per unit area gets larger. Accordingly, when obtaining a predetermined clamping force, the outer flange portion 207 can be prevented from being damaged and deformed because a pressure per unit area exerted from the clamping means 227 to the outer flange portion 207 gets smaller.

Further, since the clamping operation is performed by only one set of hydraulic clamp 203, the outer flange portion 207 can be tightened substantially simultaneously uniformly throughout the periphery thereof and uneven tightening for the outer flange portion 207 can be prevented.

Fig.s 29 through 32 show further other embodiments, in which component members having the same functions as the ones in the above-mentioned sixth embodiment are indicated by the same symbols.

### 〈 Seventh Embodiment 〉

Fig.s 29 through 30 show the seventh embodiment.

In this embodiment, an end plate 252 as a flanged member to be clamped of an autoclave 250 is adapted to be detachably mounted to a trunk portion 251 as a fixed member thereof by means of a hydraulic clamp 203. And a cylinder body 205 of a hydraulic cylinder 204 is fixedly secured to the trunk portion 251 by the autoclave 250 by a plurality of fixing bolts 254. By hydraulically actuating the piston 212 with a hydraulic pressure of the hydraulic cylinder 204, a flange portion 253 of the end plate 252 is adapted to be pressedly secured to the cylinder body 205 through an output portion 229 of the clamping means 227.

### 〈 Eighth Embodiment 〉

Fig. 31 shows the eighth embodiment.

Fig. 31 is a view corresponding to Fig. 23, in which an advancement slant cam 256 is protroded from the left side of a piston 257, and the clamping means 227 is provided within a space at the left side of the advancement slant cam 256.

### 〈 Ninth Embodiment 〉

Fig. 32 shows the ninth embodiment. This is obtained by modifying the one shown in Fig. 31 and so constructed that the clamping means can be located in the unclampable retracted position under its contracted condition and located in the clampable advanced position under its expanded condition. That is, a solid cylinder body 260 is fixedly secured to a fixed stand 261 as the fixed member, and there are provided a clamping means 264, a piston 265 and an advancement slant cam 266 in the outer peripheral portion thereof 260. And a cylindrical member 262 to be clamped is placed about the cylinder body 260 in an inserted manner and an inner flange portion 263 thereof 262 is pressedly secured to the fixed stand 261 by the output portion 267 of the clamping means 264.

By the way, the piston may be formed in a square-tube configuration instead of the cylindrical configuration in the above-mentioned embodiments. And the clamping means may be so constructed that it can be switched over positionally in the radial direction of the piston by the advancement slant cam or constructed integrally instead of a plurality of clamping members arranged in an annular state in the above-mentioned embodiments. Further, instead of a plurality of retracting springs in the above-mentioned embodiments, the retracting means may be so constructed that it can resiliently retract the clamping means in the radial direction, for example it may be constructed by a clamping means itself made of such a material as having an elastic restoring force.

## Claims

1. Hydraulic clamp (3) including a hydraulic cylinder 4, with a clamping actuation oil chamber 15, a piston 12 and a clamping means 27 between the one end side and the other and side of a cylinder body 5 of said hydraulic cylinder 4,
said clamping means 27 being constituted by a plurality of clamping members 27a arranged in annular fashion around the axis A of the hydraulic cylinder 4,
said clamping means 27 comprising at least a clamping means output portion 29, provided at the other end side which can be shifted expansively and contractively between a clamping advanced position X and an unclamping retracted position Y at predetermined different distances along the axis A of the hydraulic cylinder 4,
said clamping means 27 being adapted to be pushed to the clamping advanced position X by an advancement slant cam 31,
said clamping means 27 being adapted to be advanced by the advancement slant cam 31 from the unclamping retracted Position Y to the clamping advanced position X under a clamping means advancing actuation condition upon the piston 12 being actuated from the one end side of the cylinder body 5 to the other end side thereof through the clamping means advancing lift N,
characterized in that
the clamping actuation oil chamber 15, the piston 12 and the clamping means 27 are arranged along the foregoing axis A from one end to the other end in the mentioned order, with said plural clamping members 27a being received by the other end surface of the above mentioned piston 12,
retracting means 30 with at least one spring 41 are provided on the plural clamping members 27a,
said clamping members 27a are resilently urged toward the unclamping retracted position Y by said spring 41,
said clamping means 27 have a clamping force transmitting surface and are provided substantially uniformly throughout the periphery of the hydraulic cylinder 4,
said clamping means 27 are adapted to be diplaceable substantially uniform between an unclamped position U and a clamped position C along the axis A of the hydraulic cylinder 4 in the clamping advanced position X,
said clamping means 27 are adapted to be urged to the umclamping retracted position Y by the retracting means 30 disposed between neighbouring clamping members 27a, and
said clamping means 27 are also adapted to be pushed from the unclamped position U to the clamped position C by a piston output portion 12a by moving together with the piston 12 under the clamping actuation condition upon the piston 12 being actuated toward the other end side of the cylinder 4 through a clamping actuation lift distance M at the other and side beyond a clamping means advancing lift distance N,
wherein an allowable stroke L of maid piston 12 within the cylinder body 5 is set to a value not less than a value obtained by summing up the clamping actuation lift distance M and the clamping means advancing lift distance N.

2. A hydraulic clamp as recited in Claim 1, wherein
guide peripheral grooves 35 for the guidance of expansive and contractive shifts are provided in the respective clamping members 27a arranged in the annular shape, and a guide ring 34 for the guidance of expansive and contractive shifts is fitted radially slidably into the guide peripheral grooves 35,
so that the guide ring 34 guides the respective clamping members 27a in parallel from the unclampable retracted position Y to the clampable advanced position X under the clamping means advancing actuation condition wherein the piston 12 is actuated from the one end side to the other end side through the clamping means advancing lift N and
to the contrary, the guide ring 34 separates the respective clamping members 27a from the advancement slant cam 31 under the clamping means retracting actuation condition wherein the piston 12 is actuated from the other end side to the one end side through the clamping means advancing lift N.

3. A hydraulic clamp as recited in Claim 1, wherein
along substantially the same axis as the axis A of the hydraulic cylinder 4, a through-hole 14 is provided in the piston 12 and a passage D is provided in the clamping means 27 so that a clamp member 6 to be forced is inserted into the through-hole 14 and the passage D in order from the one side to the other side of the cylinder body 5, and a passive portion 25 is formed by enlarging the other end side diameter of the clamp member 6 to be forced,
the clamping means 27 is adapted to be shifted expansively to the unclampable retracted position Y remote from the axis A of the hydraulic cylinder 4 by the retracting means 30 as well as to be shifted contractively to the clampable advanced position X near the axis A of the hydraulic cylinder 4 by the advancement slant cam 31,
the passage D is kept opened and the clamping means 27 leaves the passive portion 25 so that the clamp member 6 to be forced can pass through the passage D under such a condition that the clamping means 27 is located in the unclampable retracted position Y,
the clamping means 27 is adapted to be shifted contractively from the unclampable retracted position Y to the clampable advanced position X by he guidance of the advancement slant cam 31 so that the passage D is narrowed under the clamping means advancing actuation condition wherein the piston 12 is actuated from the one end side to the other end side through the clamping means advancing lift N, and
the clamping means 27 is brought in contact with the passive portion 25 transmittably so that the actuation force by the piston 12 can be transmitted to the passive portion 25 through the clamping means 27 under the clamping actuation condition wherein the piston 12 is actuated from the one end side to the other end side through the clamping actuation lift M.

4. A hydraulic clamp as recited in Claim 3, wherein
the piston 12, the clamping means 27 and the advancement slant cam 31 are arranged in order from the one end side to the other end side of the cylinder body 5.

5. A hydraulic clamp as recited in Claim 4, wherein
the advancement slant cam 31 comprises an inner cam 51 and an outer cam 52, and the outer cam 52 is fixedly secured to the cylinder body 5 as well as the inner cam 51 is supported slidably in the direction of the axis A of the hydraulic cylinder 4 by the outer cam 52,
a cam restoring spring 47 is provided at the other end side of the inner cam 51 so that the inner cam 51 can be resiliently urged toward the one end side by the cam restoring spring 47,
the clamping means 27 is guided by the outer cam 52 so as to contractively shift from the unclampable retracted position Y to the clampable advanced position X under the clamping means advancing actuation condition wherein the piston 12 is actuated from the one end side to the other end side through the clamping means advancing lift N,
the clamping means 27 is adapted to push the inner cam 51 toward the other end side against the cam restoring spring 47 under the clamping actuation condition wherein the piston 12 is actuated from the one end side to the other end side through the clamping actuation lift M so that the clamping means 27 is actuated from the unclamped position U to the clamped position C, and
a contact 54 of a limit-switch 53 for detecting the clamped position C is adapted to face the inner cam 51.

6. A hydraulic clamp as recited in Claim 3, wherein
the one end side of the clamp member 6 to be forced is fixedly secured to the fixed member 1 and the cylinder body 5 is adapted to be detachably fitted to the passive portion 25 provided in the other end side of the clamp member 6 to be forced.

7. A hydraulic clamp as recited in Claim 3, wherein
the cylinder body 5 (205) is fixedly secured to the fixed member 76 (201) and the passive portion 25 (207) of the clamp member to be forced is adapted to be detachably fitted to the cylinder body 5 (205).

8. A hydraulic clamp as recited in Claim 7, wherein
the passive portion 207 of the clamp member to be forced is provided in a member 202 to be clamped for a hydraulic clamp 203.

9. A hydraulic clamp as recited in Claim 6, wherein
there is provided a fixing means 112 which serves to fixedly secure the one end side of the cylinder body 105 to a cylinder supporting member S,
the fixing means 112 comprises a ring-shaped mounting flange 115, a flange fitting portion 114 and a stopper means 113,
the flange fitting portion 114 is formed by narrowing the lower portion of the cylinder body 105, the mounting flange 115 is provided as a separate member relative to the flange fitting portion 114, and the mounting flange 115 is adapted to be fitted rotatably to the flange fitting portion 114 as well as to be stopped at the intermediate height of the flange fitting portion 114 by the stopper means 113,
mounting holes 116 in the direction of the axis A of the hydraulic cylinder 4 are provided in the mounting flange 115 at a plurality of locations in the peripheral direction thereof, the mounting bolts 117 are inserted into the mounting holes 116 from the other end side of the cylinder body 105 and the mounting bolts 117 are adapted to be threadably engaged with the threaded holes of the cylinder supporting member S, and
the cylinder body 105 is adapted to be pressedly secured to the cylinder supporting member S by pressing the flange fitting portion 114 to the one end side by a tightening force of the mounting bolts 117 through the mounting flange 115 and the stopper means 113.

10. A hydraulic clamp as recited in Claim 6, wherein
at least two sets of hydraulic clamps 103, 104 are arranged side by side adjacently, mounting portions 109, 110 are provided in the respective hydraulic clamps 103, 104 at their one end sides,
the one hydraulic clamp 103 has a prop 122 interposed between the cylinder body 105 and the mounting portion 109 and the width d₁ of the prop 122 in the arrangement direction of the both hydraulic clamps 103, 104 is settled smaller than the width d₂ of the cylinder body 105,
the prop 122 of the one hydraulic clamp 103 is disposed adjacently to the cylinder body 105 of the other hydraulic clamp 104 and the one end side surface 127 of the cylinder body 105 of the one hydraulic clamp 103 is located outside the other end side surface 128 of the cylinder body 105 of the other hydraulic clamp 104, and
the respective mounting portions 109, 110 are fixedly secured to the cylinder supporting member S by the respective fixing means 111, 112.

## Patentansprüche

1. Eine hydraulische Klemme (3), bestehend aus einem hydraulischen Zylinder (4) mit einer Klemmbetätigungsölkammer (15), einem Kolben (12) und einem Klemmittel (27) zwischen der einen Stirnseite und der anderen Stirnseite eines Zylinderkörpers (5) des hydraulischen Zylinders (4),
wobei das Klemmittel (27) durch eine Mehrzahl von Klemmelementen (27a), die ringförmig um die Achse A des hydraulischen Zylinders angeordnet sind, gebildet ist,
wobei das Klemmittel (27) wenigstens einen Klemmittelausgangsabschnitt (29) aufweist, der an der anderen Stirnseite angeordnet ist und expansiv und kontraktiv zwischen einer vorgerückten klemmenden Position X und einer rückgezogenen nichtklemmenden Position Y um einen vorgegebenen unterschiedlichen Abstand entlang der Achse A des hydraulischen Zylinders (4) verschoben werden kann,
wobei das Klemmittel (27) dazu eingerichtet ist, in die vorgerückte klemmende Position X durch einen schrägen Vorbewegungsnocken (31) gedrückt zu werden, und
wobei das Klemmittel (27) dazu eingerichtet ist, durch den schrägen Vorbewegungsnocken (31) von der nichtklemmenden rückgezogenen Position Y in die klemmende vorgerückte Position X vorbewegt zu werden, während ein Klemmmittelvorbewegungsbetätigungszustand auf den Kolben (12) von der einen Stirnseite des zylindrischen Körpers (5) auf dessen andere Stirnseite um den Klemmittelfortschrittshub N bewirkt wird,
dadurch gekennzeichnet, daß
die Klemmbetätigungsölkammer (15), der Kolben (12) und das Klemmittel (27) entlang der vorangenannten Achse A von dem einen Ende zu dem anderen Ende in der genannten Reihenfolge angeordnet sind, wobei die Mehrzahl von Klemmelementen (27a) von der anderen Endfläche des oben erwähnten Kolbens (12) aufgenommen werden,
Rückholmittel (30) mit wenigstens einer Feder (41) auf der Mehrzahl von Klemmelementen (27a) vorgesehen sind,
wobei die Klemmelemente (27a) nachgiebig in Richtung auf die nichtklemmende zurückgezogene Position Y durch die Feder (41) gezwungen werden,
wobei die Klemmittel (27) eine die Klemmkraft übertragende Fläche haben und im wesentlichen gleichförmig über den Umfang des hydraulischen Zylinders (4) angeordnet sind,
wobei die Klemmittel (27) dazu eingerichtet sind, im wesentlichen gleichförmig zwischen einer nichtklemmenden Position U und einer klemmenden Position C entlang der Achse A des hydraulischen Zylinders (4) in der klemmenden fortgeschrittenen Position X verlagert zu werden,
wobei die Klemmittei (27) dazu eingerichtet sind, in die nichtklemmende zurückgezogene Position Y durch das Rückholmittel (30) das zwischen benachbarten Klemmelementen (27a) angeordnet ist, gezwungen zu werden, und
wobei die Klemmittel (27) weiter dazu eingerichtet sind, von der nichtklemmenden Position U in die klemmende Position C durch einen Kolbenausgangsabschnitt (12a) durch Bewegung gemeinsam mit dem Kolben (12) während des Klemmbetätigungszustands bewegt zu werden, während der Kolben (12) hin zu der anderen Stirnseite des Zylinders (4) über einen Klemmbetätigungshubabstand M an der anderen Stirnseite über einen Klemmittelfortschrittshubabstand N betätigt wird,
wobei ein zulässiger Hub L des Kolbens (12) in dem Zylinderkörper (5) auf einen Wert eingestellt wird, der nicht kleiner ist als ein Wert, der durch Aufsummieren des Klemmbetätigungshubabstands M und des Klemmittelfortschrittshubabstands N erreicht wird.

2. Eine hydraulische Klemme nach Anspruch 1, wobei
Führungsumfangskerben (35) zur Führung der expansiven und kontraktiven Verschiebungen in den jeweiligen Klemmelementen (27) vorgesehen und in der Ringform angeordnet sind, und ein Führungsring (34) für die Führung der expansiven und kontraktiven Verschiebungen radial gleitbar in die Führungskerben (35) eingepaßt ist,
so daß der Führungsring (34) die jeweiligen Klemmelemente (27a) während des Zustands der Vorwärtsbetätigung des Klemmittels parallel von der nichtklemmenden rückgezogenen Position in die klemmende vorgerückte Position X führt, wobei der Kolben (12) von der einen Stirnseite zu der anderen Stirnseite um den Klemmittelfortschrittshub N betätigt wird, und der Führungsring (34) dagegen während des Zustands der
Rückzugsbetätigung der Mittel die jeweiligen Klemmelemente (27a) von dem geneigten Fortschrittsnocken (31) trennt, wobei der Kolben (12) von der anderen Stirnseite zu der einen Stirnseite um den Klemmittelvorbewegungshub N betätigt wird.

3. Eine hydraulische Klemme nach Anspruch 1, wobei entlang im wesentlichen derselben Achse A des hydraulischen Zylinders (4) eine Durchgangsbohrung (14) in dem Kolben (12) vorgesehen ist und eine Passage D in den Klemmitteln (27) vorgesehen ist, so daß ein zu belastendes Klemmelement (6) in die Durchgangsbohrung (14) und die Passage D in dieser Reihenfolge von der einen Seite zu der anderen Seite des Zylinderkörpers (5) eingesetzt ist, und ein passiver Abschnitt (25) durch Vergrößern des Durchmessers der anderen Stirnseite des zu belastenden Klemmelements (6) ausgebildet ist,
das Klemmittel (27) dazu eingerichtet ist, expansiv in die nichtklemmende zurückgezogene Position Y entfernt von der Achse A des hydraulischen Zylinders (4) durch das Rückholmittel (30) verschoben zu werden als auch um kontraktiv in die klemmende vorgerückte Position X in der Nähe der Achse A des hydraulischen Zylinders (4) durch den geneigten Vorschubnocken (31) verschoben zu werden,
die Passage D geöffnet bleibt und das Klemmittel (27) den passiven Abschnitt (25) verläßt, so daß das zu belastende Klemmelement (6) durch die Passage D in den Zustand geführt werden kann, in dem das Klemmittel (27) in der nichtklemmenden zurückgezogenen Position ist,
das Klemmittel (27) dazu eingerichtet ist, kontraktiv von der nichtklemmenden zurückgezogenen Position in die klemmende vorgerückte Position X durch die Führung des geneigten Vorschubnockens (31) verschoben zu werden, so daß die Passage D während des Zustands der Vorschubbetätigung des Klemmittels, in der der Kolben (12) von der einen Stirnseite zu der anderen Stirnseite um den Klemmittelvorschub N betätigt wird, verengt wird, und
das Klemmittel (27) in Berührung mit dem passiven Abschnitt (25) gebracht wird, so daß die Betätigungskraft von dem Kolben (12) auf den passiven Abschnitt (25) über das Klemmittel (27) in dem Klemmbetätigungszustand, in dem der Kolben (12) von der einen Stirnseite zu der anderen Stirnseite um den Klemmbetätigungshub M betätigt wird, übertragen werden kann.

4. Eine hydraulische Klemme nach Anspruch 3, wobei der Kolben (12), das Klemmittel (27) und der geneigte Vorschubnocken (31) in dieser Reihenfolge von der einen Stirnseite zu der anderen Stirnseite des Zylinderkörpers (5) angeordnet sind.

5. Eine hydraulische Klemme nach Anspruch (4), wobei der geneigte Vorschubnocken (31) einen inneren Nocken (51) und einen äußeren Nocken (52) aufweist, wobei der äußere Nocken (52) fest an dem Klemmkörper (5) befestigt ist und der innere Nocken (51) in Richtung der Achse A des hydraulischen Zylinders (4) durch den äußeren Nocken (52) gleitbar getragen wird, eine Nockenrückstellfeder (47) an dem anderen Ende des inneren Nockens (51) vorgesehen ist, so daß der innere Nocken (51) nachgiebig in Richtung auf die eine Stirnfläche durch die Nockenrückholfeder (47) gezwungen werden kann,
das Klemmittel (27) von dem äußeren Nocken (52) geführt wird, um so während des Betätigungszustands des Vorrückens des Klemmittels, in dem der Kolben (12) von der einen Stirnseite zu der anderen Stirnseite um den Klemmittelvorschubhub N betätigt wird, kontraktiv von der nichtklemmenden zurückgezogenen Position Y in die klemmende vorgerückte Position X verschoben zu werden,
das Klemmittel (27) dazu ausgebildet ist, den inneren Nocken (51) während des Klemmbetätigungszustands in dem der Kolben (12) von der einen Stirnseite zu der anderen Stirnseite um den Klemmbetätigungshub M betätigt wird, in Richtung auf die andere Stirnseite gegen die Nockenrückholfeder (47) zu drücken, so daß das Klemmittel von der nicht geklemmten Position U in die geklemmte Position C gebracht wird, und
ein Kontakt (54) eines Begrenzungsschalters (53) zum Erkennen der geklemmten Position C dazu eingerichtet ist, zu der inneren Fläche (51) zu weisen.

6. Eine hydraulische Klemme nach Anspruch 3, wobei die eine Stirnfläche des zu belastenden Klemmelements (6) fest an dem ortsfesten Element (1) befestigt ist und der zylindrische Körper (5) dazu eingerichtet ist, lösbar an den passiven Abschnitt (5), der an der anderen Stirnfläche des zu belastenden Klemmelements (6) vorgesehen ist, angepaßt zu werden.

7. Eine hydraulische Klemme nach Anspruch 3, wobei der zylindrische Körper (5, 205) fest an das ortsfeste Element (76, 205) befestigt ist, und der passive Abschnitt (5, 207) des zu belassenen Klemmelements dazu eingerichtet ist, lösbar an den zylindrischen Körper (5, 205) angepaßt zu werden.

8. Eine hydraulische Klemme nach Anspruch 7, wobei der passive Abschnitt (7) des zu belassenen Klemmelements in einem Element (202) vorgesehen ist, das für eine hydraulische Klemme (203) zu klemmen ist.

9. Eine hydraulische Klemme nach Anspruch 6, wobei ein Fixationsmittel (112) vorgesehen ist, das zum festen Sichern der einen Stirnseite des zylindrischen Körpers (105) an ein Zylinderstützelement S dient,
das Fixationsmittei (112) einen ringförmigen Befestigungflansch (115), einen Flanschpaßabschnitt (114) und ein Stoppermittel (113) aufweist,
der Flanschpaßabschnitt (114) durch Annähern des unteren Abschnitts des zylindrischen Körpers (105) ausgebildet ist, der Montageflansch (115) als gesondertes Element relativ zu dem Flanschpaßabschnitt (114) vorgesehen ist und der Befestigungsflansch (115) dazu eingerichtet ist, drehbar an den Flanschpaßabschnitt (114) angepaßt zu sein, als auch an der Zwischenhöhe des Flanschpaßabschnitts (114) durch das Stoppmittel (113) gestoppt zu werden,
Befestigungsbohrungen (116) in Richtung der Achse A des hydraulischen Zylinders (4) in dem Befestigungsflansch (115) an einer Mehrzahl von Orten, in dessen Umfangsrichtung vorgesehen sind, wobei die Befestigungsbolzen (117) und die Befestigungsbohrungen (116) von der anderen Stirnseite des Zylinderkörpers (115) eingesetzt sind und die Befestigungsbolzen (117) dazu eingerichtet sind, in Schraubverbindung mit Gewindebohrungen des zylindrischen Stützelements S gebracht zu werden, und
der zylindrische Körper (105) dazu eingerichtet ist, in Druckverbindung mit dem Zylinderstützelement S durch Drücken des Flanschpaßabschnitts (114) an die eine Stirnseite durch eine Anzugskraft auf die Befestigungsbolzen (117) über den Befestigungsflansch (115) und das Stoppermittel (113) gebracht zu werden.

10. Ein hydraulische Klemme nach Anspruch 6, wobei
wenigstens ein zweiter Satz von hydraulischen Klemmen (103, 104) Seite an Seite einander benachbart angeordnet sind, Befestigungsabschnitte (109, 110) in den jeweiligen hydraulischen Klemmen (103, 104) an ihren einen Stirnseiten vorgesehen sind,
die eine hydraulische Klemme (103) einen Pfeiler (122), der zwischen dem zylindrischen Körper (105) und dem Befestigungsabschnitt (109) angeordnet ist, und die Breite d₁ des Pfeilers (122) in der Richtung der Anordnung der beiden hydraulischen Klemmen (103, 104) kleiner eingestellt ist als die Breite d₂ des zylindrischen Körpers (105),
der Pfeiler (122) der einen hydraulischen Klemme (103) benachbart dem zylindrischen Körper (105) der anderen hydraulischen Klemme (104) angeordnet ist und die eine Stirnfläche (127) des zylindrischen Körpers (105) der einen hydraulischen Klemme (103) außerhalb der anderen Stirnfläche (128) des zylindrischen Körpers (105) der anderen hydraulischen Klemme (104) angeordnet ist, und
die jeweiligen Befestigungsabschnitte (109, 110) durch die jeweiligen Fixationselemente (111, 112) fest an dem Zylinderstützelement S gesichert sind.

## Revendications

1. Organe de serrage hydraulique (3) comprenant un vérin hydraulique (4), avec une chambre d'huile (15) d'actionnement de serrage, un piston (12) et un moyen de serrage (27) entre l'une des faces d'extrémité et l'autre face d'extrémité d'un corps (5) dudit vérin hydraulique (4),
ledit moyen de serrage (27) étant constitué par une pluralité d'organes de serrage (27a) disposés de façon annulaire autour de l'axe (A) du vérin hydraulique (4),
ledit moyen de serrage (27) comprenant au moins une partie de sortie (29) du moyen de serrage, prévue à l'autre face d'extrémité, qui peut subir un déplacement accompagné d'expansion et de contraction entre une position avancée de serrage (X) et une position rétractée de non-serrage (Y) à des distances différentes prédéterminées le long de l'axe (A) du vérin hydraulique (4),
ledit moyen de serrage (27) étant agencé de manière à être poussé vers la position avancée de serrage (X) au moyen d'une came à pente d'avancement (31),
ledit moyen de serrage (27) étant agencé de manière à être avancé au moyen de la came à pente d'avancement (31) depuis la position rétractée de non-serrage (Y) jusqu'à la position avancée de serrage (X) dans un état de mise en oeuvre d'avancement du moyen de serrage lors de l'actionnement du piston (12) depuis ladite face d'extrémité du corps de vérin (5) jusqu'à son autre face d'extrémité sur une course d'avancement (N) du moyen de serrage,
caractérisé en ce que la chambre d'huile d'actionnement de serrage (15), le piston (12) et le moyen de serrage (27) sont disposés le long de l'axe (A) précité depuis une extrémité jusqu'à l'autre extrémité selon l'ordre mentionné, ladite pluralité d'organes de serrage (27a) étant reçus par l'autre surface d'extrémité du piston (12) mentionné ci-dessus,
des moyens de rétraction (30) avec au moins un ressort (41) sont prévus sur les organes de serrage (27a),
lesdits organes de serrage (27a) sont rappelés élastiquement vers la position rétractée de non-serrage (Y) par ledit ressort (41),
lesdits moyens de serrage (27) ont une surface de transmission de force de serrage et sont prévus de façon sensiblement uniforme sur toute la périphérie du vérin hydraulique (4),
lesdits moyens de serrage (27) sont agencés de façon à être déplaçables de façon sensiblement uniforme entre une position non-serrée (U) et une position serrée (C) le long de l'axe (A) du vérin hydraulique (4) dans la position avancée de serrage (X),
lesdits moyens de serrage (27) sont agencés de manière à être rappelés vers la position rétractée de non-serrage (Y) par les moyens de rétraction (30) disposés entre les organes de serrage (27a) avoisinants, et
lesdits moyens de serrage (27) sont également agencés de manière à être poussés depuis la position non-serrée (U) vers la position serrée (C) par une partie de sortie de piston (12a) en les déplaçant avec, le piston (12) en état de mise en oeuvre de serrage lors de l'actionnement du piston (12) vers l'autre face d'extrémité du vérin (4) sur une distance (M) de course d'actionnement de serrage à l'autre face d'extrémité au-delà de la distance (N) de course d'avancement des moyens de serrage,
dans lequel une course admissible (L) dudit piston (12) à l'intérieur du corps de vérin (5) est fixée à une valeur non inférieure à la valeur obtenue par l'addition de la distance (M) de couse d'actionnement de serrage et de la distance (N) de course d'avancement des moyens de serrage.

2. Organe de serrage hydraulique selon la revendication 1, dans lequel des gorges périphériques de guidage (35) destinées à permettre le guidage de mouvements d'expansion et de contraction sont prévus dans les organes de serrage (27a) respectifs disposés de façon annulaire, et un anneau de guidage (34) destiné à permettre le guidage des mouvements d'expansion et de rétraction est monté radialement coulissant dans les gorges périphériques de guidage (35),
de manière que l'anneau de guidage (34) guide les organes de serrage (27a) respectifs en parallèle depuis la position rétractée de non-serrage (Y) jusqu'à la position avancée de serrage (X) en état de mise en oeuvre d'avancement des moyens de serrage dans lequel le piston (12) est actionné depuis une face d'extrémité jusqu'à l'autre face d'extrémité sur la course (N) d'avancement des moyens de serrage et
au contraire, l'anneau de guidage (34) opère la séparation des organes de serrage (27a) respectifs de la came à pente d'avancement (31) en état de mise en oeuvre de rétraction dans laquelle le piston (12) est actionné depuis l'autre face d'extrémité jusqu'à la face d'extrémité sur la course d'avancement (N) des moyens de serrage.

3. Organe de serrage hydraulique selon la revendication 1, dans lequel, sensiblement le long du même axe que l'axe (A) du vérin hydraulique (4), un trou de passage (14) est prévu dans le piston (12) et un passage (D) est prévu dans les moyens de serrage (27) de manière que l'organe de serrage (6) destiné à être monté à force soit inséré dans le trou de passage (14) et le passage (D) dans l'ordre depuis la face d'extrémité jusqu'à l'autre face d'extrémité du corps de vérin (5), et une partie passive (25) est formée par agrandissement du diamètre de l'autre face d'extrémité de l'organe de serrage (6) destiné à être monté à force,
le moyen de serrage (27) est agencé de manière à être déplacé avec expansion vers la position rétractée de non-serrage (Y) éloignée de l'axe (A) du vérin hydraulique (4) à l'aide du moyen de rétraction (30), ainsi que pour être déplacé avec contraction vers la position avancée de serrage (X), près de l'axe (A) du vérin hydraulique (4), par la came à pente d'avancement (31),
le passage (D) est maintenu ouvert et le moyen de serrage (27) laisse la partie passive (25) de manière que l'organe de serrage (6) destiné à être monté à force puisse passer à travers le passage (D) dans un état tel que le moyen de serrage (27) soit situé dans la position rétractée de non-serrage (Y),
le moyen de serrage (27) est agencé de manière à être déplacé avec contraction depuis la position rétractée de non-serrage (Y) jusqu'à la position avancée de serrage (X) par guidage de la came à pente d'avancement (31), de manière que le passage (D) soit rétréci en état de mise en oeuvre d'avancement du moyen de serrage dans lequel le piston (12) est actionné depuis une première face d'extrémité jusqu'à l'autre face d'extrémité sur la course d'avancement du moyen de serrage (N), et
le moyen de serrage (27) est amené en contact avec la partie passive (25) avec effet de transmission de manière que la force d'actionnement par le piston (12) puisse être transmise à la partie passive (25) à l'aide du moyen de serrage (27) en état de mise en oeuvre de serrage, dans lequel le piston (12) est actionné depuis la première face d'extrémité jusqu'à l'autre face d'extrémité sur la course de d'actionnement de serrage (M).

4. Organe de serrage hydraulique selon la revendication 3, dans lequel le piston (12), le moyen de serrage (27) et la came à pente d'avancement (31) sont agencés dans l'ordre depuis la première face d'extrémité jusqu'à l'autre face d'extrémité du corps de vérin (5).

5. Organe de serrage hydraulique selon la revendication 4, dans lequel la came à pente d'avancement (31) comprend une came interne (51) et une came externe (52), et la came externe (52) est fixée à demeure au corps de vérin (5), et la came intérieure (51) est supportée coulissante en direction de l'axe (A) du vérin hydraulique (4) par la came externe (52),
un ressort de rappel de came (47) est prévu à l'autre face d'extrémité de la came interne (51) de manière que la came interne (51) puisse être rappelée élastiquement vers la face première d'extrémité par le ressort de rappel de came (47),
l'organe de serrage (27) est guidé par la came externe (52) de manière à se déplacer avec contraction depuis la position rétractée de non-serrage (Y) jusqu'à la position avancée de serrage (X) en état de mise en oeuvre d'avancement du moyen de serrage dans lequel le piston (12) est actionné depuis la première face d'extrémité jusqu'à l'autre face d'extrémité sur la course (N) d'avancement du moyen de serrage,
le moyen de serrage (27) est agencé de manière à pousser la came interne (51) vers l'autre face d'extrémité à l'encontre de l'action du ressort de rappel de came (47) en état de mise en oeuvre de serrage, dans lequel le piston (12) est actionné depuis la première face d'extrémité jusqu'à l'autre face d'extrémité sur la course d'actionnement de serrage (M), de manière que le moyen de serrage (27) soit actionné depuis la position non-serrée (U) vers la position serrée (C), et
un contact (54) d'interrupteur de fin de course (53) destiné à détecter la position serrée (C) est agencé pour faire face à la came interne (51).

6. Organe de serrage hydraulique selon la revendication 3, dans lequel la première face d'extrémité de l'organe de serrage (6) destiné à être monté à force est fixé à demeure à l'organe fixé (1) et le corps de vérin (5) est agencé de manière à être monté détachable sur la partie passive (25) prévue sur l'autre extrémité de l'organe de serrage (6) destiné à être monté à force.

7. Organe de serrage hydraulique selon la revendication 3, dans lequel le corps de vérin (5) (205) est fixé à demeure à l'organe fixé (76) (201) et la partie passive (25) (207) de l'organe de serrage destiné à être monté à force est agencé de manière à être monté détachable sur le corps de vérin (5) (205).

8. Organe de serrage hydraulique selon la revendication 7, dans lequel la partie passive (207) de l'organe de serrage destiné à être monté à force est prévue dans un organe (202) destiné à être serré par un organe de serrage hydraulique (203).

9. Organe de serrage hydraulique selon la revendication 6, dans lequel il est prévu un moyen de fixation (112) qui sert à fixer à demeure la face d'extrémité du corps de vérin (105) sur l'organe de support de vérin (S),
le moyen de fixation (112) comprend une bride de montage (115) en forme d'anneau, une partie (114) de montage de la bride et un moyen d'arrêt (113),
la partie (114) de montage de la bride est déformée en rétrécissant la partie inférieure du corps de vérin (105), la bride de montage (115) est prévue comme un organe séparé par rapport à la partie (114) de montage de la bride, et la bride de montage (115) est agencée de manière à être montée rotative sur la partie (114) de montage de la bride, ainsi que pour être stoppée à la hauteur intermédiaire de la partie (114) de montage de la bride par l'intermédiaire du moyen d'arrêt (113),
des trous de montages (116) orientés en direction de l'axe (A) du vérin hydraulique (4) sont prévus dans la bride de montage (115) à une pluralité d'emplacements dans sa direction périphérique, des boulons de montage (117) sont insérés dans les trous de montages (116) depuis l'autre face d'extrémité du corps de vérin (105) et les boulons de montage (117) sont agencés de manière à être en prise par leur filetage dans les trous taraudés de l'organe de support de vérin (S), et
le corps de vérin (105) est agencé de manière à être monté à force sur l'organe de support de vérin (S) en pressant la partie (114) de montage de la bride vers la première face d'extrémité par une force de serrage des boulons de montage (117) au moyen de la bride de montage (115) et du moyen d'arrêt (113).

10. Organe de serrage hydraulique selon la revendication 6, dans lequel au moins deux jeux d'organes de serrage hydrauliques (103,104) sont agencés côte à côte de façon adjacente, des parties de montage (109,110) sont prévues dans les organes de serrage hydrauliques (103,104) respectifs à leurs faces d'extrémité,
l'organe de serrage hydraulique (103) possède un support (122) intercalé entre le corps de vérin (105) et la partie de montage (109), et la largeur (d₁) du support (122) dans la direction d'agencement des deux organes de serrage hydrauliques (103,104) est fixée à une valeur inférieure à la largeur (d₂) du corps de vérin (105),
le support (122) de l'organe de serrage hydraulique (103) est disposé adjacent au corps de vérin (105) de l'autre organe de serrage hydraulique (104), et la surface d'extrémité (127) du corps de vérin (105) de l'organe de serrage (103) est située à l'extérieur de l'autre surface d'extrémité (128) du corps de vérin (105) de l'autre organe de serrage (104), et
les parties de montage (109,110) respectives sont fixées à demeure sur l'organe de support de vérin (S) par les moyens de fixation (111,112) respectifs.
